Europäisches Patentamt

European Patent Office

Office européen des brevets

(19)

(11)  EP 0 647 602 B1

(12)  **EUROPÄISCHE PATENTSCHRIFT**

(45) Veröffentlichungstag und Bekanntmachung des Hinweises auf die Patenterteilung:
    **08.04.1998  Patentblatt 1998/15**

(51) Int. Cl.$^6$: **C04B 35/468**,  H01B 3/12, H01G 4/12

(21) Anmeldenummer: 94202897.8

(22) Anmeldetag: **06.10.1994**

(54) **Substituierter Barium-Neodym-Titan-Perowskit, dielektrische, keramische Zusammensetzung, Kondensator und Mikrowellenkomponente**

Substituted barium-neodymium-titanium perovskite, dielectric, ceramic composition and capacitor, and microwave component containing said composition

Composition céramique diélectrique de structure perovskite barium-neodymium-titanium substituée et condensateur et composant microonde contenant cette composition

(84) Benannte Vertragsstaaten:
    **DE FR GB NL**

(30) Priorität: **09.10.1993 DE 4334454**

(43) Veröffentlichungstag der Anmeldung:
    **12.04.1995  Patentblatt 1995/15**

(73) Patentinhaber:
    • **Philips Patentverwaltung GmbH**
      **22335 Hamburg (DE)**
      Benannte Vertragsstaaten:
      **DE**
    • **PHILIPS ELECTRONICS N.V.**
      **5621 BA  Eindhoven (NL)**
      Benannte Vertragsstaaten:
      **FR GB NL**

(72) Erfinder:
    • **Kohler, Heinz,**
      **c/o Philips Patentverw. GmbH**
      **D-20097 Hamburg (DE)**
    • **Mateika, Dieter, Dr.,**
      **c/o Philips Patentverw. GmbH**
      **D-20097 Hamburg (DE)**

    • **Oostra, Sietse, Dr.,**
      **c/o Philips Patentverw. GmbH**
      **D-20097 Hamburg (DE)**

(74) Vertreter:
    **Volmer, Georg, Dipl.-Ing. et al**
    **Philips Patentverwaltung GmbH,**
    **Röntgenstrasse 24**
    **22335 Hamburg (DE)**

(56) Entgegenhaltungen:
    **DE-A- 2 941 304**

    • **DATABASE WPI Week 8906, Derwent Publications Ltd., London, GB; AN 89-041631 & JP-A-63 312 616 (MARCON ELECTRONICS) 21. Dezember 1988 & PATENT ABSTRACTS OF JAPAN vol. 13, no. 155 (E-743) 14. April 1989 & JP-A-63 312 616**
    • **DATABASE WPI Week 9017, Derwent Publications Ltd., London, GB; AN 90-129774 & JP-A-2 080 366 (NARUMI SEITO) 20. März 1990**

**Beschreibung**

Die Erfindung betrifft einen substituierten Barium-Neodym-Titan-Perowskit, eine dielektrische, keramische Zusammensetzung, einen Kondensator mit einem keramischen Dielektrikum und eine Mikrowellenkomponente, insbesondere ein dielektrischer Resonator, mit einem keramischen Dielektrikum.

Die Entwicklung dielektrischer, keramischer Werkstoffe ist von wachsender Bedeutung für die Herstellung elektronischer Bauelemente, denn dem bekannten Trend zu Miniaturisierung dieser Bauelemente sind häufig nur aufgrund der unzulänglichen Eigenschaften der zur Verfügung stehenden Werkstoffe Grenzen gesetzt. Zu diesen Unzulänglichkeiten gehören z.B. die unbefriedigende Reproduzierbarkeit der Eigenschaften von dielektrischen, keramischen Werkstoffen und die schwierige Optimierung der relevanten Parameter für bestimmte Einsatzgebiete.

Die wichtigsten Einsatzgebiete für dielektrische, keramische Werkstoffe sind kapazitive Elemente in elektronischen Schaltungen, z.B. für das keramische Dielektrikum von Kondensatoren und Mikrowellenkomponenten.

Für diese Anwendungen sind eine hohe Dielektrizitätskonstante $\varepsilon$, ein niedriger dielektrische Verlustfaktor $\tan\delta$ und ein Temperaturkoeffizient der Kapazität $TC_c = \pm\, 0$ die wichtigsten Eigenschaften.

Es ist bekannt, für diese Anwendungsgebiete dielektrische keramische Zusammensetzungen zu verwenden, die Bariumoxid, Titanoxid, Neodymoxid sowie weitere binäre Oxide enthal ten.

Beispielsweise ist aus der europäischen Patentanmeldung EP 0 473 347 A1 eine dielektrische, keramische Zusammensetzung bekannt, die hauptsächlich aus Bariumoxid, Titanoxid, Neodymoxid, Samariumoxid und Wismutoxid, besteht und durch die folgende Formel charakterisiert ist:

$x$BaO-$y$TiO2-$z$[(1-a-b)Nd$_2$O$_3$-aSm$_2$O$_3$- bBi$_2$O$_3$], wobei
$0,10 \le x \le 0,20,$
$0,60 \le y \le 0,75,$
$0,10 \le z \le 0,24,$
$x + y + z = 1;$
$0 < a \le 0,25$ und
$0 < b \le 0,30.$

Nach einer Ausführungsform besteht die dielektrische, keramische Zusammensetzung im wesentlichen aus Bariumoxid, Titanoxid, Neodymoxid, Samariumoxid und Wismutoxid als Hauptkomponenten und ist durch die folgende Formel charakterisiert:

$x$BaO-$y$TiO2-$z$[(1-a-b)Nd$_2$O$_3$-aSm$_2$O$_3$- bBi$_2$O$_3$], wobei
$0,10 \le x \le 0,20,$
$0,60 \le y \le 0,75,$
$0,10 \le z \le 0,25,$
$x + y + z = 1;$
$0 < a \le 0,30$
$0 < b \le 0,35$ und

nicht mehr als 2,0 Gewichtsanteile an Aluminiumoxid pro 100 Gewichtsanteile der Gesamtmenge der besagten Hauptkomponenten enthalten sind.

Nach dem Ausführungsbeispiel werden die entsprechenden Rezepturen zusammengestellt und das Material bei 1000°C kalziniert und dann bei 1300°C -1400°C gesintert.

Nach dieser oder ähnlichen Rezepturen, die aus den Ausgangsoxiden innerhalb sehr weiter Konzentrationbereiche zusammengestellt werden, entstehen im allgemeinen mehrere oxidische Phasen nebeneinander. Durch die dadurch verursachten lokalen Schwankungen im Mikrogefüge sind die Eigenschaften der entsprechenden dielektrischen Zusammensetzungen schlecht optimal einstellbar und die relevanten Parameter streuen stark, wenn die Fertigung nicht ständig streng kontrolliert wird.

Der Erfindung liegt daher die Aufgabe zugrunde, einen verbesserten dielektrischen, keramischen Werkstoff zur Verfügung zu stellen, dessen dielektrische Eigenschaften sicher reproduziert und für bestimmte Einsatzgebiete optimiert werden können.

Es ist eine weitere Aufgabe der Erfindung, eine bei niedrigen Temperaturen sinternde, dielektrische, keramische Zusammensetzung mit dem oben genannten Werkstoff mit verbesserter Mikrogefüge anzugeben.

Mit dieser dielektrischen keramischen Zusammensetzung soll die Herstellung eines NPO-Kondensators ermöglicht werden, d.h. eines Kondensators, für den die Änderung der Kapazität $TC_c$ zwischen -55°C und +125°C nicht mehr als +/- 30ppm/°K gegenüber dem bei 20 °C gemessenen Wert variiert.

Weiterhin soll mit dieser dielektrischen keramischen Zusammensetzung die Herstellung einer Mikrowellenkompo-

2

nente, insbesondere eines dielektrischen Resonators (DR), ermöglicht werden, der sich durch eine hohe Temperaturkonstanz der Resonanzfrequenz auszeichnet.

Die Aufgabe wird erfindungsgemäß gelöst, durch die Bereitstellung eines substituierten Barium-Neodym-Titan-Perowskits mit Defektstruktur der allgemeinen Zusammensetzung

$$\left[\!\left[ A'_{a1}{}^{n1+}\ A''_{a2}{}^{n2+}\ldots A^{n'}{}_{an}{}^{nn+}\ \square_{an+1}\right]\!\right]\ \left[\!\left[ B'_{b1}{}^{m1+}\ B''_{b2}{}^{m2+}\ldots B^{m'}{}_{bm}{}^{mn+}\right]\!\right]\ O_3$$

wobei die Kationen

$$A'_{a1}{}^{n1+}\ A''_{a2}{}^{n2+}\ldots A^{n'}{}_{an}{}^{nn+}$$

mindestens $Ba^{2+}$, $Nd^{3+}$ und gegebenenfalls ein oder mehrere Kationen aus der Gruppe $Cs^{1+}$, $Rb^{1+}$, $Tl^{1+}$, $K^{1+}$, $Pb^{2+}$, $Ag^{1}$, $Sr^{2+}$, $Na^{1+}$, $Bi^{3+}$, $La^{3+}$, $Ca^{2+}$, $Ce^{3+}$, $Cd^{2+}$, $Pr^{3+}$, $Nd^{3+}$, $Sm^{3+}$, $Eu^{3+}$, $Gd^{3+}$, $Th^{4+}$, $Tb^{3+}$, $Mn^{2+}$, $Li^{1+}$, $Dy^{3+}$, $U^{4+}$, $Y^{3+}$, $Fe^{2+}$, $Ho^{3+}$, $Ce^{4+}$, $Co^{2+}$, $Zn^{2+}$, $Er^{3+}$, $Tm^{3+}$, $Yb^{3+}$, und/oder $Lu^{3+}$ umfassen, die Kationen

$$B'_{b1}{}^{m1+}\ B''_{b2}{}^{m2+}\ldots B^{m'}{}_{bm}{}^{mn+}$$

mindestens Titan und gegebenenfalls ein oder mehrere Kationen aus der Gruppe $Mn^{2+}$, $Cr^{2+}$, $In^{3+}$, $V^{2+}$, $Fe^{2+}$, $Pb^{4+}$, $Li^{1+}$, $Zr^{4+}$, $Co^{2+}$, $Sc^{3+}$, $Zn^{2+}$, $Cu^{2+}$, $U^{6+}$, $Mg^{2+}$, $Hf^{4+}$, $Mo^{3+}$, $Sn^{4+}$, $Ni^{2+}$, $Nb^{4+}$, $Ti^{3+}$, $W^{4+}$, $Mo^{4+}$, $Fe^{3+}$, $Mn^{3+}$, $V^{3+}$, $Re^{4+}$, $Ir^{4+}$, $Ru^{4+}$, $W^{5+}$, $Ta^{5+}$, $Cr^{3+}$, $Ga^{3+}$, $Co^{3+}$, $Mo^{5+}$, $Ni^{3+}$, $Sb^{5+}$, $W^{6+}$, $Nb^{5+}$, $Mo^{6+}$, $Fe^{4+}$, $Re^{5+}$, $V^{4+}$, $Te^{6+}$, $V^{5+}$, $Cu^{3+}$, $Al^{3+}$, $Mn^{4+}$, $Ge^{4+}$, und/oder $Re^{7+}$ umfassen,

■ Kationenleerstellen sind und

$a_1 + a_2 + \ldots + a_{n+1} = 1$,
$0,17 < a_{n+1} < 0,30$,
$b_1 + b_2 + \ldots + b_n = 1$ und
$a_1{}^*n^1 + a_2{}^*n^2 + \ldots + a_n{}^*n^n + b_1{}^*m^1 + b_2{}^*m^2 + \ldots + b_m{}^*m^m = 6$ ist.

Dieser substituierte Barium-Neodym-Titan-Perowskit mit Defektstruktur zeichnet sich durch besonders hohe Dielektrizitätskonstanten, niedrige Verlustwinkel bei mittleren Frequenzen und niedrige Werte für den Temperaturkoeffizienten der Kapazität $TC_c$ aus.

Innerhalb der erfindungsgemäßen Bereiche für die chemischen Zusammensetzungen lassen sich durch kontrollierte Mischkristallbildung Verbindungsreihen (Feste Lösungen) synthetisieren, ohne daß Fremdphasen entstehen. Nachdem die Eigenschaften der einphasigen Verbindungen in diesen Reihen einer einfachen, teils sogar linearen Relation nach der Mischungsregel unterliegen, können die dielektrischen Eigenschaften gezielt und reproduzierbar eingestellt und optimiert werden **(lattice engineering)**.

Innerhalb der Erfindung ist es bevorzugt, daß für die Kationen

$$A'_{a1}{}^{n1+}\ A''_{a2}{}^{n2+}\ldots A^{n'}{}_{an}{}^{nn+}$$

das gewichtete arithmetische Mittel der Ionenradien $0,1344nm < \bar{r}_a < 0,1395nm$ und für die Kationen

$$B'_{b1}{}^{n1+}\ B''_{b2}{}^{n2+}\ldots B^{n'}{}_{bn}{}^{nn+}$$

das gewichtete arithmetische Mittel der Ionenradien $0,0598nm < \bar{r}_b < 0,0620nm$ ist. Mit diesen Werten für die Ionenradien erfüllen die erfindungsgemäßen Perowskite die sogenannte "Perowskitbedingung" $r_A + r_O = t\sqrt{2}(r_B + r_O)$ mit $0,8 < t < 1,0$ ideal. Dadurch ist die Bildung von Fremdphasen mit Sicherheit ausgeschlossen und es entfallen die lokalen Schwankungen in den physikalischen Eigenschaften und die erhöhten dielektrischen Verluste, die durch Fremdphasen verursacht werden.

Es ist weiterhin bevorzugt, daß in dem erfindungsgemäßem substituiertem Barium-Neodym-Titan-Perowskit mit Defektstruktur die Kationen

$$A'^{n1+}_{a1} \quad A''^{n2+}_{a2} \ldots A^{n'}{}^{nn+}_{an}$$

ein oder mehrere Kationen aus der Gruppe $Ca^{2+}$, $Sr^{2+}$, $Pb^{2+}$, $Gd^{3+}$, $Sm^{3+}$, $Pr^{3+}$, $Bi^{3+}$ und $Na^{1+}$ umfassen und die Kationen

$$B'^{m1+}_{b1} \quad B''^{m2+}_{b2} \ldots B^{m'}{}^{mn+}_{bm}$$

ein oder mehrere Kationen aus der Gruppe $Mg^{2+}$, $Nb^{5+}$, $Ta^{5+}$, $In^{3+}$, $Li^{1+}$, $Ga^{3+}$, $Zr^{4+}$, $Ge^{4+}$ und $Hf^{4+}$ umfassen.

Diese A-Kationen zeigen gegenüber Sauerstoff dieselbe bevorzugte Koordinationszahl wie Barium und Neodym, diese B-Kationen gegenüber Sauerstoff dieselbe bevorzugte Koordinationszahl wie Titan. Gleichzeitig sind die genannten Radienbedingungen erfüllt. Man erhält daher in diesem bevorzugten Bereich Mischkristallreihen (Feste Lösungen) innerhalb sehr weiter Konzentrationsbereiche mit optimalen Möglichkeiten für das "lattice engineering".

Besonders bevorzugt ist ein substituierter Barium-Neodym-Titan-Perowskit mit Defektstruktur, bei dem die Kationen

$$A'^{n1+}_{a1} \quad A''^{n2+}_{a2} \ldots A^{n'}{}^{nn+}_{an}$$

$Ba^{2+}$, $Nd^{3+}$ $Ca^{2+}$, $Sr^{2+}$, $Gd^{3+}$ und gegebenenfalls $Bi^{3+}$ sind und die Kationen

$$B'^{m1+}_{b1} \quad B''^{m2+}_{b2} \ldots B^{m'}{}^{mn+}_{bm}$$

$Ti^{4+}$ und $Nb^{5+}$ sind.

Eine andere Ausführungsform des substituierten Barium-Neodym-Titan-Perowskits ist dadurch gekennzeichnet, daß die Kationen

$$A'^{n1+}_{a1} \quad A''^{n2+}_{a2} \ldots A^{n'}{}^{nn+}_{an}$$

$Li^{1+}$, $Pb^{2+}$ und/oder $Bi^{3+}$ umfassen
und/oder
die Kationen

$$B'^{m1+}_{b1} \quad B''^{m2+}_{b2} \ldots B^{m'}{}^{mn+}_{bm}$$

$Li^{1+}$ umfassen.

Durch systematische Mischkristallbildung (lattice engineering) lassen sich bei dieser Zusammensetzung eine optimale Kombination der Werte für einen NPO- Kondensators finden.

Eine optimale Kombination der Werte für einen NPO-Kondensator hat z.B. ein substituierter Barium- Neodym-Titan-Perowskit mit Defektstruktur der Zusammensetzung $\{Ba_{.242}Sr_{.02}Ca_{.03}Nd_{.232}Gd_{.23}\blacksquare_{.246}\}[Ti_{.97}Nb_{.03}]O_3$.

Ein anderer Aspekt der Erfindung betrifft eine dielektrische, keramische Zusammensetzung, die einen erfindungsgemäßen substituierten Barium-Neodym-Titan-Perowskit mit Defektstruktur und keramische Hilfsstoffe enthält.

Diese keramischen Hilfsstoffe können Sinteradditive, z.B. MgO, $Y_2O_3$ usw., Kornwachstumsinhibitoren, z.B. $TiO_2$, permanente Binder oder Stoffe, die mit den erfindungsgemäßen Perowskiten eutektische Systeme bilden, sein.

Besonders bevorzugt ist es, als keramischen Hilfsstoff Siliziumdioxid zu verwenden. Siliziumdioxid als keramischer Hilfsstoff erniedrigt die Sintertemperatur. Dadurch wird der Brennprozeß wirtschaftlicher. Trotz der niedrigen Brenntemperatur erhält man sehr feinkristalline Perowskite mit einer homogenen Korngröße < 1μm und ca. 98 % der theoretischen Dichte.

Die Erfindung bezieht sich weiterhin auf einen Kondensator mit einem keramischen Dielektrikum, das aus einer dielektrischen, keramischen Zusammensetzung nach Anspruch 7 oder 8 besteht.

Er zeichnet sich dadurch aus, daß aufgrund der hohen Dielektrizitätskonstanten des erfindungsgemäßen Perowskits das Dielektrikum dünner sein kann und bei Kondensatoren mit Vielschichtstruktur weniger Schichten gebraucht werden. Das macht die Kondensatorfertigung wirtschaftlicher, die Fertigung von Kondensatoren mit Vielschichtstruktur auch deswegen, weil Edelmetall für die inneren Elektroden gespart werden kann.

Die Erfindung bezieht sich weiterhin auf eine Mikrowellenkomponente, insbesondere einen dielektrischen Resonator, mit einem Dielektrikum, das aus einer dielektrischen, keramischen Zusammensetzung nach Anspruch 7 oder 8 besteht.

Für diesen Verwendungszweck ist die dielektrische, keramische Zusammensetzung nach Anspruch 7 oder 8, besonders geeignet, weil sie eine Temperaturkonstanz der Resonanzfrequenz in der Größenordnung von $10^{-6}$/K ermöglicht. Außerdem erlaubt sie durch die Möglichkeit des "lattice engineering" eine besonders genaue Feinabstimmung auf die Frequenzen.

Nachfolgend wird die Erfindung anhand von Figuren näher erläutert und es werden Ausführungsbeispiele und Testergebnisse angegeben.

**Fig.1**: Kristallstruktur des erfindungsgemäßen Perowskites mit Defektstruktur.

**Fig.2**: Relation von $TC_C$ zu $R_A$ für die Mischkristallreihe $[Ba_{1-3(x+y)}Nd_{2x}Gd_{2y}\blacksquare_{x+y}](Ti)O_3$.

**Fig.3**: Relation von $TC_C$ zu $R_A$ für die Mischkristallreihe $[Ba_{1-3(x+y)}Nd_{2x}Sm_{2y}\blacksquare_{x+y}](Ti)O_3$.

**Fig.4**: Relation von $TC_C$ zu $R_B$ für die Mischkristallreihe $[Ba_{.208}Nd_{.528}\blacksquare_{.264}](Ti_{1-x}B_x)O_3$.

**Fig.5**: Relation von $TC_C$ zu $R_A/R_B$ für die Mischkristallreihe $[Ba_{1-3x}Nd_x\blacksquare_x](Ti)O_3$: Gekoppelte Substitutionen mit $Ga^{3+}$ bzw. $In^{3+}$.

**Fig.6**: Dielektrischer Resonator (DR); a) Feldverteilung und Feldlinienbild des $TE_{01\delta}$- Modus eines dielektrischen Resonators (DR), b) Ankopplungsmöglichkeiten eines keramischen Zylinderresonators an die $TE_{01\delta}$-Schwingung.

Die Bezeichnung "Perowskit" leitet sich von dem Mineral Perowskit ab und bezeichnet allgemein Verbindungen bestimmter Zusammensetzung und Kristallstruktur, die die Grundlage einer ganzen Industrie für Elektrokeramiken bilden, die vom Dielektrikum bis zum Hochtemperatur-Supraleiter reichen.

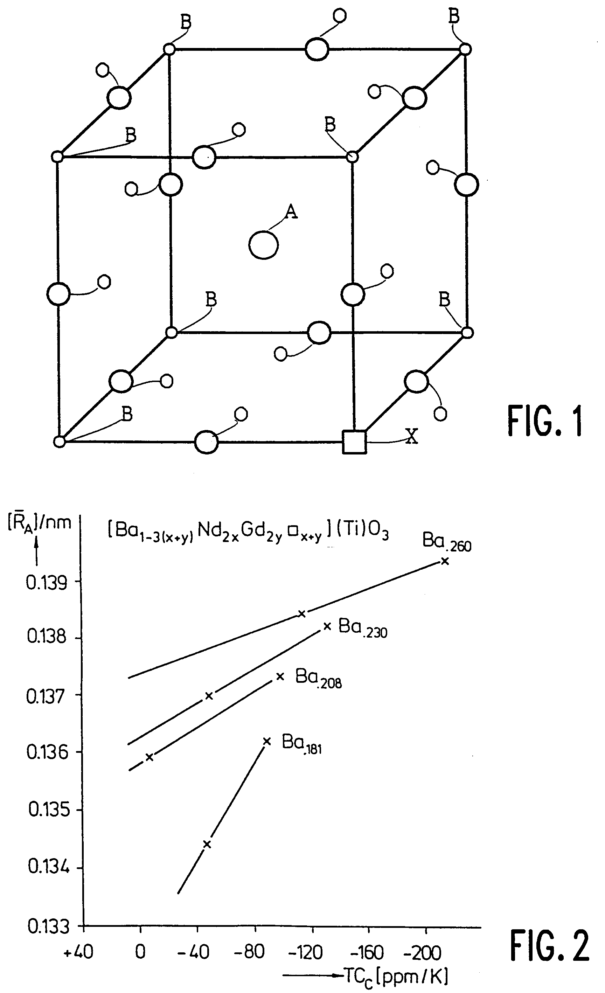

Die chemische Konstitution der idealen Perowskitstruktur läßt sich mit der allgemeinen Formel $ABX_3$ beschreiben. Die Perowskitstruktur, siehe **Fig.1**, ist aus Würfeln aufgebaut, die aus drei chemischen Elementen **A, B** und X im Verhältnis 1:1:3 gebildet wird. Die A- und B- Atome werden als Kationen eingebaut, die X- Atome, normalerweise Sauerstoff **O**, als Anionen. Dabei ist das A-Kation jeweils in seiner Größe vergleichbar zum Sauerstoff, während das B-Kation sehr viel kleiner ist. Die Wertigkeit der einzelnen Kationen kann variieren, solange ihre Summe +6 ist und sie damit die Ladung der drei Sauerstoffanionen ausgeglichen.

Die Sauerstoffanionen und die A-Kationen bilden in der idealen, unverzerrten Perowskitstruktur eine kubisch dichteste Kugelpackung. Die B-Kationen besetzen die Oktaederlücken im Gitter, die jeweils von ausschließlich von 6 Sauerstoffanionen gebildet werden.

Durch Abwandlungen in der Zusammensetzung der Perowskite entstehen mehr oder weniger verzerrte, weniger hochsymmetrische Perowskitstrukturen.

Abwandlungen der Verbindungen mit Perowskitstruktur entstehen dadurch, daß die A- und/oder die B- Kationen teilweise durch ein oder mehrere andere Kationen substituiert (ersetzt) werden können, sodaß aus den zunächst ternären Perowskiten $AbO_3$ höhermultiple Perowskite z.B. quarternäre, quinäre, senäre, septenäre, usw. Perowskite werden.

Die Perowskitstruktur ist in Bezug auf die Substitution sehr anpassungsfähig, sie kann auf den Gitterplätzen der A-Kationen gleichzeitig bis zu 20 verschiedene Kationen, auf den Gitterplätzen der B-Kationen gleichzeitig bis zu 40 verschiedene Kationen enthalten.

Die Substitution kann durch den teilweisen Austausch eines Kations durch ein anderes mit gleicher Wertigkeit erfolgen. Sie kann auch aber so erfolgen, daß zwei oder mehr Kationen von sehr unterschiedlicher Wertigkeit zwei oder mehrere Kationen gleicher Wertigkeit ersetzen. Beispielsweise kann die Kombination von einem zweiwertigen Kation und einem sechswertigen Kation zwei vierwertige Kationen ersetzen. Beispiele solcher Kombinationen, die vierwertige Kationen ersetzen können, sind $Ga^{3+}$-$Nb^{5+}$, $Mg^{2+}$-$W^{6+}$, $Mg^{2+}$-$2Nb^{5+}$, usw. Es ist offensichtlich, daß eine Vielzahl solcher Kombinationen möglich sind. Perowskite mit Kationen unterschiedlicher Wertigkeit auf den A-Gitterplätzen oder den B-Gitterplätzen oder auf beiden bezeichnet man als **komplexe Perowskite**.

Eine weitere Substitutionsmöglichkeit ist die gekoppelte Substitution, bei der gleichzeitig A-Kationen und B-Kationen durch Kationen abweichender Wertigkeit substituiert werden. Durch den Zwang zum Ladungsausgleich sind diese Substitutionen miteinander gekoppelt. Deshalb bezeichnet man sie als **gekoppelte Substitution**.

Der erfindungsgemäße Barium-Neodym-Titan-Perowskit mit Defektstruktur besitzt ein grundlegendes Bauprinzip, das sich durch Substitution von der Ausgangsverbindung

$$Ba_{1-3x}Nd_{2x}\blacksquare_x\, TiO_3$$
mit $0{,}17 \leq x \leq 0{,}30$ und

■ = Kationenleerstellen

ableitet. Das heißt, er besitzt eine Perowskit-Defektstruktur, bei der 17-30% der A-Gitterplätze unbesetzt bleiben. Dabei ist jeweils eine Kationenleerstelle ■ im Untergitter der zweiwertigen A-Kationen mit zwei Kationen assoziiert, die drei- statt zweiwertig sind.

Diese assoziierten Gruppen besitzen ein Dipolmoment. Beim Anlegen eines elektrischen Feldes können die Leerstellen und die assoziierten Kationen leicht die Positionen wechseln. Aufgrund der dadurch bewirkten "Ion Jump Polarisation" haben die erfindungsgemäßen Perowskite eine besonders hohe Dielektrizitätskonstante. Außerdem besitzen sie sehr hohe Werte für die dielektrischen Verluste bei niedrigen Frequenzen und höheren Temperaturen. Bei mittleren Frequenzen haben sie dagegen sehr niedrige Verlustwinkel.

Ausgehend von dieser Basisverbindung können die Eigenschaften der erfindungsgemäßen Perowskite durch Substutionen gezielt in weiten Grenzen variiert werden. Dazu werden die drei Wirtskationen $Ba^{2+}$, $Nd^{3+}$ und $Ti^{4+}$ durch Gastionen partiell ersetzt.

Die Gastionen müssen bestimmte Auswahlkriterien erfüllen. Wichtigstes Kriterium ist der Ionenradius des Gastions in Relation zum Ionenradius des Wirtskation. Er sollte nicht mehr als 30% nach oben oder unten abweichen. Das gleiche gilt bei mehreren Gastkationen für deren gewichtetes arithmetisches Mittel ihrer Ionenradien. Je kleiner die Radiendifferenz zwischen Wirts- und Gastkation ist, desto größer kann die Konzentration des Gastkations sein.

Ein weiteres Auswahlkriterium für die Gastionen ist ihre bevorzugte Koordinationszahl gegenüber Sauerstoff, die mit der des Wirtkations übereinstimmen sollte.

Unter diesen Substitutionsbedingungen können Reihen kontinuierlich höher substituierter Verbindungen hergestellt werden, die man sich auch als **Mischkristall oder feste Lösung (eng. solid solution)** von Ausgangsverbindung und Endverbindung der Substitutionsreihen vorstellen kann.

Nachdem die Ionenradien der drei Wirtkationen mit 0,161nm für $Ba^{2+}$, 0,128nm für $Nd^{3+}$ und 0,0605nm für $Ti^{4+}$ deutlich voneinander abweichen, gibt es drei unterschiedliche Möglichkeiten für einfache Substitutionen im Kristallgitter der Ausgangsverbindung, auf denen Gastionen mit unterschiedlichen Radien eingebaut werden können. Dazu kommt noch die Möglichkeit der gekoppelten Substitution.

## $Ba^{2+}$-Substitution

Die $Ba^{2+}$- Kationen haben den größten Ionenradius unter den Wirtskationen. Aus diesem Grund müssen auch die Gastkationen G relativ große Ionenradien haben.

Mögliche Gastkationen sind deshalb die folgenden: $Cs^{1+}$, $Rb^{1+}$, $Tl^{1+}$, $K^{1+}$, $Pb^{2+}$, $Ag^1$, $Sr^{2+}$, $Na^{1+}$, $Bi^{3+}$, $La^{3+}$, $Ca^{2+}$, $Ce^{3+}$, $Cd^{2+}$, $Pr^{3+}$, $Nd^{3+}$, und/ oder $Sm^{3+}$.

Wegen der unterschiedlichen Wertigkeit der Gastkationen gibt es verschiedene Möglichkeiten der Substitution. Als Beispiel hierfür werden im folgenden einige Substitutionsschemata angegeben:

1. $\{Ba^{2+}\} \rightarrow \{G^{2+}\}$
1. $\{2Ba^{2+}\} \rightarrow \{G^{1+} + G^{3+}\}$
1. $\{3Ba^{2+}\} \rightarrow \{2G^{3+} + ■\}$
1. $\{Ba^{2+} + ■\} \rightarrow \{2G1^+\}$

## $Nd^{3+}$- Substitution

Der Ionenradius des Neodyms liegt zwischen dem des Bariums und dem des Titans. Für die Substitution von Neodym-Kationen bieten sich die folgenden Gastkationen an: $K^{1+}$, $Ba^{2+}$, $Pb^{2+}$, $Ag^1$, $Sr^{2+}$, $Na^{1+}$, $Bi^{3+}$, $La^{3+}$, $Ca^{2+}$, $Ce^{3+}$, $Cd^{2+}$, $Pr^{3+}$, $Nd^{3+}$, $Sm^{3+}$, $Eu^{3+}$, $Gd^{3+}$, $Th^{4+}$, $Tb^{3+}$, $Mn^{2+}$, $Li^{1+}$, $Dy^{3+}$, $U^{4+}$, $Y^{3+}$, $Fe^{2+}$, $Ho^{3+}$, $Ce^{4+}$, $Co^{2+}$, $Zn^{2+}$, $Er^{3+}$, $Tm^{3+}$, $Yb^{3+}$, und/oder $Lu^{3+}$.

Auch für diese Substitution gibt es wegen der unterschiedlichen Wertigkeiten der Gastkationen mehrere Substitutionsschemata. Einige sind im folgenden aufgeführt:

1. $\{Nd^{3+}\} \rightarrow \{G^{3+}\}$
2. $\{2Nd^{3+}\} \rightarrow \{G^{2+} + G^{4+}\}$
3. $\{3Nd^{3+}\} \rightarrow \{G^{1+} + 2 G^{4+}\}$
4. $\{Nd^{3+} + ■\} \rightarrow \{G^{1+} + G^{2+}\}$
5. $\{2Nd^{3+} + ■\} \rightarrow \{3G^{2+}\}$

**Ti$^{4+}$-Substitution**

Die Ti$^{4+}$- Kationen sind die kleinsten unter den drei Wirtskationen. Seine bevorzugte Koordinationzahl gegenüber Sauerstoff beträgt sechs. Demnach bieten sich für seine Substitution die folgenden Gast-Kationen an:

Mn$^{2+}$, Cr$^{2+}$, In$^{3+}$, V$^{2+}$, Fe$^{2+}$, Pb$^{4+}$, Li$^{1+}$, Zr$^{4+}$, Co$^{2+}$, Sc$^{3+}$, Zn$^{2+}$, Cu$^{2+}$, U$^{6+}$, Mg$^{2+}$, Hf$^{4+}$, Mo$^{3+}$, Sn$^{4+}$, Ni$^{2+}$, Nb$^{4+}$, Ti$^{3+}$, W$^{4+}$, Mo$^{4+}$, Fe$^{3+}$, Mn$^{3+}$, V$^{3+}$, Re$^{4+}$, Ir$^{4+}$, Ru$^{4+}$, W$^{5+}$, Ta$^{5+}$, Cr$^{3+}$, Ga$^{3+}$, Co$^{3+}$, Mo$^{5+}$, Ni$^{3+,}$, Sb$^{5+}$, W$^{6+}$, Nb$^{5+}$, Mo$^{6+}$, Fe$^{4+}$, Re$^{5+}$, V$^{4+}$, Te$^{6+}$, V$^{5+}$, Cu$^{3+}$, Al$^{3+}$, Mn$^{4+}$, Ge$^{4+}$, und/oder Re$^{7+}$.

Auch für die Substitution des Ti$^{4+}$-Kations gibt es wegen der unterschiedlichen Wertigkeiten der Gast-Kationen mehrere Substitutionsschemata, einige sind als Beispiele im folgenden aufgeführt:

1. {Ti$^{4+}$} -> {G$^{4+}$}
2. {2Ti$^{4+}$} -> {G$^{3+}$ + G$^{5+}$}
3. {2Ti$^{4+}$} -> {G$^{2+}$ + G$^{6+}$}
4. {3Ti$^{4+}$} -> {G$^{2+}$ + 2G$^{5+}$}
5. {4Ti$^{4+}$} -> {G$^{1+}$ + 3G$^{5+}$}

**Gekoppelte Substitution**

Bei der gekoppelten Substitution werden gleichzeitig Wirtskationen auf A- **und** B-Gitterplätzen durch Gastionen abweichender Wertigkeit ersetzt. Dadurch entstehen zusätzliche Dipolmomente im Gitter der erfindungsgemäßen Perowskite. Die beiden Gastkationen unterschiedlicher Wertigkeit sind durch ein dazwischenliegendes Sauerstoffanion miteinander verbunden. Dadurch erhöht sich die elektrostatische Kopplung der Kationen im Gitter.

Ein weiterer Vorteil der gekoppelten Substitution besteht darin, daß auf diese Weise auch Kationen in das Perowskitgitter passen, die vom Ionenradius her nicht optimal auf den betreffenden Gitterplatz passen. Daher können bei dieser Substitutionsart besonders viele Substituenten benutzt werden.

Für den A-Gitterplatz sind die folgenden Gastkationen geeignet:

Cs$^{1+}$, Rb$^{1+}$, Tl$^{1+}$, K$^{1+}$, Pb$^{2+}$, Ag$^{1}$, Sr$^{2+}$, Na$^{1+}$, Bi$^{3+}$, La$^{3+}$, Ca$^{2+}$, Ce$^{3+}$, Cd$^{2+}$, Pr$^{3+}$, Nd$^{3+}$, Sm$^{3+}$, Eu$^{3+}$, Gd$^{3+}$, Th$^{4+}$, Tb$^{3+}$, Mn$^{2+}$, Li$^{1+}$, Dy$^{3+}$, U$^{4+}$, Y$^{3+}$, Fe$^{2+}$, Ho$^{3+}$, Ce$^{4+}$, Co$^{2+}$, Zn$^{2+}$, Er$^{3+}$, Tm$^{3+}$, Yb$^{3+}$, und/oder Lu$^{3+}$.

Für den B-Gitterplatz können die folgenden Gastkationen benutzt werden:

Mn$^{2+}$, Cr$^{2+}$, In$^{3+}$, V$^{2+}$, Fe$^{2+}$, Pb$^{4+}$, Li$^{1+}$, Zr$^{4+}$, Co$^{2+}$, Sc$^{3+}$, Zn$^{2+}$, Cu$^{2+}$, U$^{6+}$, Mg$^{2+}$, Hf$^{4+}$, Mo$^{3+}$, Sn$^{4+}$, Ni$^{2+}$, Nb$^{4+}$, Ti$^{3+}$, W$^{4+}$, Mo$^{4+}$, Fe$^{3+}$, Mn$^{3+}$, V$^{3+}$, Re$^{4+}$, Ir$^{4+}$, Ru$^{4+}$, W$^{5+}$, Ta$^{5+}$, Cr$^{3+}$, Ga$^{3+}$, Co$^{3+}$, Mo$^{5+}$, Ni$^{3+,}$, Sb$^{5+}$, W$^{6+}$, Nb$^{5+}$, Mo$^{6+}$, Fe$^{4+}$, Re$^{5+}$, V$^{4+}$, Te$^{6+}$, V$^{5+}$, Cu$^{3+}$, Al$^{3+}$, Mn$^{4+}$, Ge$^{4+}$, und/oder Re$^{7+}$.

Durch die unterschiedliche Wertigkeit der Gastkationen und durch den Einbau derselben auf den verschiedenen Gitterplätzen A und B erhöht sich die Zahl der Substitutionsschemata beträchtlich. Einige Beispiele sind im folgenden aufgeführt:

1. {Ba$^{2+}$} + [Ti$^{4+}$] -> {G$^{1+}$} + [G$^{5+}$]

2. {Nd$^{3+}$} + [Ti$^{4+}$] -> {G$^{2+}$} + [G$^{5+}$]

3.

$$\{Ba^{2+}\} \quad + \quad [Ti^{4+}] \quad -> \quad \{G_1{}^{3+}\} \quad + \quad [G_2{}^{3+}]$$

4. {■} + [2Ti$^{4+}$] -> {G$^{2+}$} + [2G$^{3+}$]

5.

$$\{\blacksquare\} \quad + \quad [Ti^{4+}] \quad -> \quad \{G_1^{2+}\} \quad + \quad [G_2^{2+}]$$

6. $\{\blacksquare\} + [Ti^{4+}] -> \{G^{1+}\} + [G^{3+}]$

7. $\{3\blacksquare\} + [2Ti^{4+}] -> \{3G^{2+}\} + [2G^{1+}]$

8. $\{2Nd^{3+}\} + [Ti^{4+}] -> \{2G^{2+}\} + [G^{6+}]$

9. $\{Ba^{2+}\} + [Ti^{4+}] -> \{2G^{3+}\} + [G^{2+}]$

10. $\{Nd^{3+}\} + [3Ti^{4+}] -> \{\blacksquare\} + [3G^{5+}]$

11. $\{3Ba^{2+}\} + [Ti^{4+}] -> \{3G^{3+}\} + [G^{1+}]$

12.

$$\{\blacksquare\} \quad + \quad [3Ti^{4+}] \quad -> \quad \{G_1^{3+}\} \quad + \quad [3G_2^{3+}]$$

13. $\{2\blacksquare\} + [3Ti^{4+}] -> \{2G^{3+}\} + [3G^{2+}]$

Zur Optimierung der dielektrischen Eigenschaften werden kontinuierliche Mischkristallreihen zusammengestellt. Diese zeigen eine einfache, der Temperaturkoeffizient $TC_c$ sogar eine lineare Relation zum Substitutionsgrad.

Für einfache Substitutionen genügt es, die Konzentration des Gastkations gegen die dielektrischen Parameter aufzutragen.

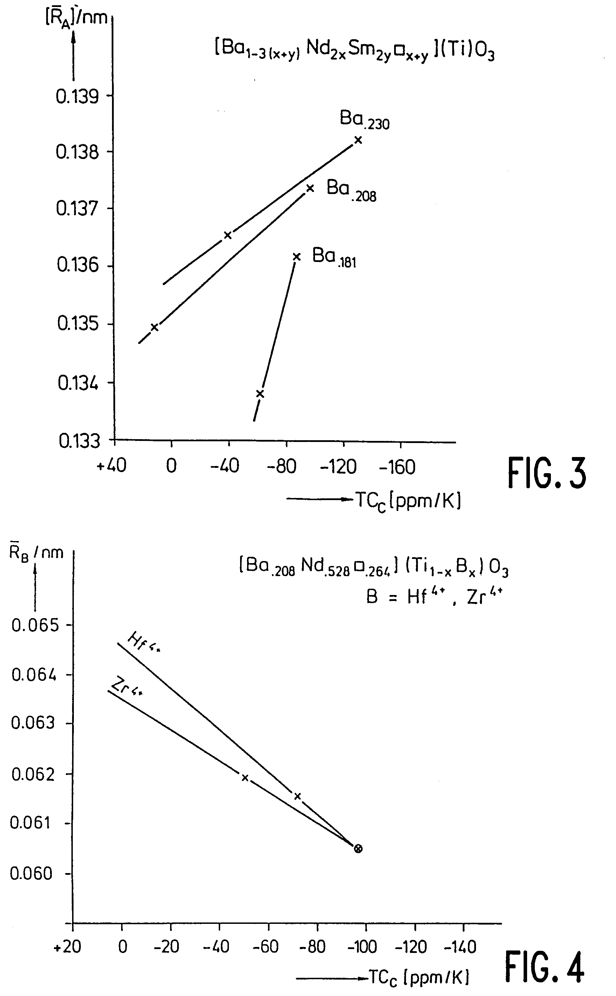

Für komplexe Substitutionen hat es sich dagegen als sehr vorteilhaft erwiesen, das gewichtete arithmetische Mittel aller A- Kationen bzw. der B-Kationen als Basis zu verwenden. Solche linearen Relationen sind in **Fig. 2 bis 4** dargestellt.

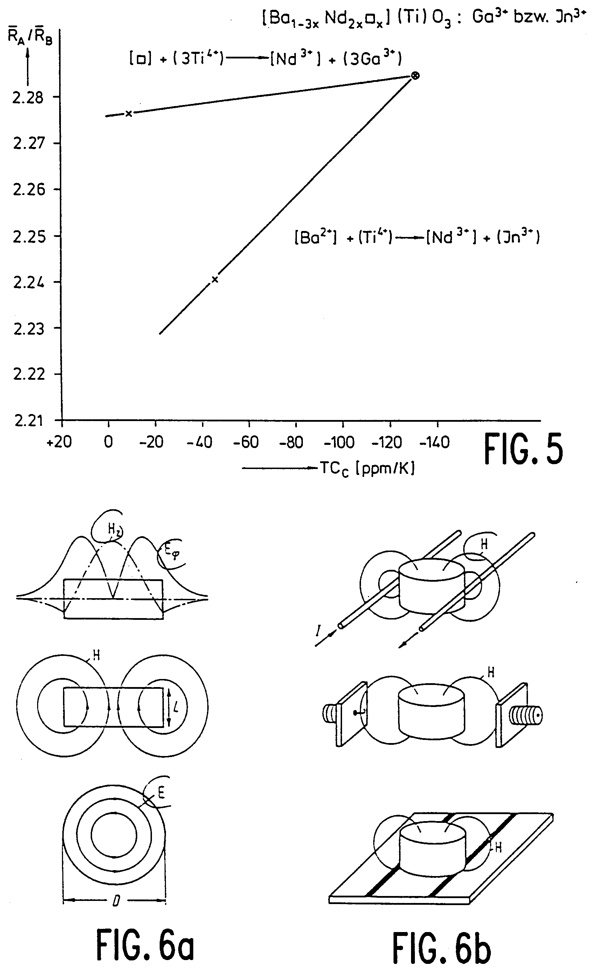

Für gekoppelte Substitutionen wurde überraschenderweise gefunden, daß lineare Relationen gefunden werden, wenn das Verhältnis $R_A/R_B$ der gewichteten, arithmetischen Mittel der A-Kationen und der B-Kationen als Basis gewählt wird. Eine solche Relation ist in **Fig.5** dargestellt.

Die erfindungsgemäßen Perowskite werden üblicherweise als gesinterte, keramische Formkörper verwendet.

Der Herstellungsprozeß für diese Formkörper gliedert sich in die folgenden Stufen:

- Herstellung der erfindungsgemäßen Perowskite als Pulver,
- Formgebung,
- Trocknen und Sintern,
- Endbehandlung.

Zur Herstellung der Perowskite als Pulver wird üblicherweise die "Mixed Oxide" - Technik verwendet, d.h. es werden die entsprechenden binären Oxide als Rohstoffe eingesetzt. Als Rohstoffe für elektronische Keramik sollen diese Ausgangsoxide eine besonders hohe chemische Reinheit und eine gleichmäßig kleine Korngröße < 1 $\mu$m haben.

Die Ausgangsoxide werden entsprechend den molaren Gewichtsverhältnissen abgewogen, entweder trocken oder naß vermahlen, gegebenenfalls getrocknet, dann bei 900 bis 1200°C kalziniert.

Die Ausgangsoxidmischungen können allerdings auch aus den entsprechenden Karbonaten, Alkoxylaten und anderen Verbindungen, die sich leicht und ohne Rückstände zu den Oxiden zersetzen lassen, gemischt werden. Sie können auch durch Kopräzipitation, Sol-Gel-Verfahren oder Hydrothermmalsynthese gewonnen werden.

Das durch die Kalzination bereits vorverdichtete Material kann mit keramischen Hilfsstoffen versetzt werden und noch einmal gemahlen werden.

Für die Formgebung wird das so vorbereitete Pulver mit einer Bindemittelzubereitung versetzt. Diese Zubereitungen enthalten im allgemeinen neben dem eigentlichen Bindemittel und einem Lösungsmittel wie Wasser oder organische Lösungsmittel noch Plastifizierer, Verflüssiger und Benetzungsmittel.

Die Formgebung erfolgt mit den bekannten Verfahren, z.B. Pressen, Extrudieren, Formgießen oder Foliengießen. Die grünen Formkörper werden getrocknet und vorgebrannt, um die Komponenten der Bindemittelzubereitung auszutreiben. Anschließend wird bei Temperaturen von 1000° bis 1400°C dichtgesintert.

Anschließend kann der gebrannte Formkörper noch mechanisch bearbeitet werden.

AUSFÜHRUNGSBEISPIEL

Als Ausgangsmaterialien werden die Oxide oder die Karbonate mit einer mittleren Korngröße $d_{50}$ von ca. 0,5μm benutzt. Sie werden in den molaren Relationen entsprechend der chemischen Zusammensetzung abgewogen. Nach dem Naßmahlen der Oxide bzw. Karbonate in einer Kugelmühle und anschließendem Trocknen an Luft wird das Pulver bei 1100°C kalziniert. Anschließend wird das kalzinierte Material naß mit $ZrO_2$-Kugeln gemahlen, getrocknet und mit Polyvinylalkohol als Bindemittel versetzt. Die so erhaltene Mischung wird in bekannter Weise zu Pillen mit einem Durchmesser von 6mm und einer Dicke von 0.55mm gepreßt. Anschließend erfolgt die Sinterung der Pillen im Temperaturbereich von 1000°C bis 1400°C.

Für die Bestimmung der dielektrischen Eigenschaften werden die Pillen mit CrNi/Au-Elektroden beschichtet. Die Messung der Kapazität C bzw. $\Delta C$ erfolgt im Temperaturbereich von - 55 bis +125°C. Aus den erhaltenen Daten wird in bekannter Weise die Dielektrizitätskonstante $\varepsilon$ und der Temperaturkoeffizient der Kapazität $TC_C$ berechnet. Die dielektrischen Verluste tg $\delta$ werden bei 1KHz gemessen.

Beispiele der erfindungsgemäßen Zusammensetzungen und deren dielektrischen Eigenschaften sind in Tabelle 1 und 2 wiedergegeben.

Die Bestimmung der Phasenreinheit erfolgt durch Pulverdiffraktometer-Aufnahmen und anhand von Schliffbilder.

Zur Herstellung des Kondensators wird das keramische Dielektrikum mit Elektroden und/oder Kontakten versehen. Zur Bildung der Elektroden wird edelmetallhaltige Metallisierungspaste im Muster der gewünschten Elektrodenform auf den Formkörper aufgebracht. Dies geschieht meist schon vor dem Sintern auf dem grünen Formkörper und die Elektroden werden im Verlauf des Sinterprozesses eingebrannt. Die Elektroden können aber auch durch andere Verfahren, wie galvanisches Beschichten oder Aufdampfen gebildet werden. Nach den gleichen Verfahren werden die Kontakte gebildet.

Als dielektrischer Resonator wird ein Zylinderresonator genutzt, dessen Höhe L kleiner als sein Durchmesser D ist (**Fig.6**). Es können aber auch andere möglichst einfache geometrische Formen genutzt werden. Als keramisches Material werden erfindungsgemäße dielektrische, keramische Zusammensetzungen mit einer mittleren Dielektrizitätskonstanten $30 < \varepsilon_r < 200$ und möglichst geringen dielektrischen Verlusten verwendet.

Wenn ein solcher dielektrische Körper in ein elektromagnetisches Wechselfeld geeigneter Frequenz mit der axialen magnetischen Feldstärke $H_z$ und der tangentialen elektrischen Feldstärke $E_\varphi$ gebracht wird, bildet sich in ihm wegen des Sprungs des $\varepsilon_r$ an seiner Oberfläche eine stehende Welle, also eine resonante Schwingung.

Die Güte dieses Resonators wird im wesentlichen durch die dielektrischen Verluste des Materials bestimmt.

Um Energieabstrahlung zu verhindern, muß der dielektrische Resonator in einigem Abstand mit einer metallischen Abschirmung umgeben werden. Wenn diese ca. einen Abstand D/2 vom dielektrischen Resonator hat, sind die Leitungsverluste vernachlässigbar.

Leitungen lassen sich einfach und wirkungsvoll über das Magnetfeld H an die $TE_{01\delta}$ - Schwingung des dielektrischen Resonators ankoppeln. Drei mögliche Ausführungsformen sind in **Fig.6** skizziert.

Die so hergestellten Reonatoren werden im Frequenzbereich $1 < f < 30$ GHz anstelle von Koaxial- und Hohlraumresonatoren eingesetzt. Dadurch können Größe und Kosten von Resonatoren und auf ihnen basierenden Bauelementen wie Filtern und stabilisierten Oszillatoren beträchtlich reduziert werden. Besonders einfach lassen sich dielektrische Reso natoren mit MIC-Schaltungen ("Microwave Integrated Cir cuit") kombinieren.

## Tabelle 1: Einfache Substitution

| Nr. | Zusammensetzung | Substitutionsschema |
|---|---|---|
| 1 | $\{Ba_{.1905}Na_{.02}Nd_{.403}Gd_{.130}\blacksquare_{.2565}\}(Ti)O_3$ | $\{2Ba^{2+}\} \rightarrow \{Na^{1+} + Nd^{3+}\}; \{Nd^{3+}\} \rightarrow \{Gd^{3+}\}$ |
| 2 | $\{Ba_{.181}Ca_{.120}Nd_{.236}Gd_{.230}\blacksquare_{.233}\}(Ti)O_3$ | $\{Nd^{3+}\} \rightarrow \{Gd^{3+}\}$ |
| 3 | $\{Ba_{.181}Ca_{.180}Nd_{.196}Gd_{.230}\blacksquare_{.213}\}(Ti)O_3$ | $\{Nd^{3+}\} \rightarrow \{Gd^{3+}\}$ |
| 4 | $\{Ba_{.208}Nd_{.380}Gd_{.148}\blacksquare_{.264}\}(Ti)O_3$ | $\{Nd^{3+}\} \rightarrow \{Gd^{3+}\}$ |
| 5 | $\{Ba_{.208}Nd_{.143}Sm_{.385}\blacksquare_{.264}\}(Ti)O_3$ | $\{Nd^{3+}\} \rightarrow \{Sm^{3+}\}$ |
| 6 | $\{Ba_{.208}Nd_{.143}Sm_{.385}\blacksquare_{.264}\}(Ti)O_3$ | $\{Nd^{3+}\} \rightarrow \{Sm^{3+}\}$ |
| 7 | $\{Ba_{.188}Sr_{.02}Nd_{.348}Gd_{.18}\blacksquare_{.264}\}(Ti)O_3$ | $\{Ba^{2+} + Nd^{3+}\} \rightarrow \{Sr^{2+} + Gd^{3+}\}$ |
| 8 | $\{Ba_{.208}Nd_{.33}Pr_{.05}Gd_{.148}\blacksquare_{.264}\}(Ti)O_3$ | $\{Nd^{3+}\} \rightarrow \{Pr^{3+} + Gd^{3+}\}$ |

| Nr. | $TC_c$ ppm/K | $\epsilon$ | $tg\,\delta$ $* 10^{-4}$ | $\bar{r}_a$ | $\bar{r}_a/\bar{r}_{Ti}$ |
|---|---|---|---|---|---|
| 1 | +2.7 | 75 | 1.4 | 0.1355 | 2.240 |
| 2 | -30 | 86 | 4.0 | 0.1346 | 2.224 |
| 3 | -24 | 87 | 0.5 | 0.1349 | 2.230 |
| 4 | -7 | 83 | 1.0 | 0.1359 | 2.247 |
| 5 | -13 | 81 | 3.3 | 0.1352 | 2.235 |
| 6 | -13 | 81 | 3.3 | 0.1352 | 2.235 |
| 7 | -14 | 79 | 4.0 | 0.1325 | 2.235 |
| 8 | -13 | 81 | 0.8 | 0.1361 | 2.250 |

$\{\}$ = A-Platz, () = B-Platz, $\blacksquare$ = Kationenleerstelle,

$\bar{r}_a$ = mittlerer Radius der Kationen auf dem A-Platz

## Tabelle 2: Gekoppelte Substitution

| Nr. | Zusammensetzung | Substitutionsschema |
|---|---|---|
| 1 | $\{Ba_{.181}Sr_{.12}Ca_{.05}Bi_{.03}Nd_{.156}Gd_{.23}\blacksquare_{.233}\}(Ti_{.95}Nb_{.05})O_3$ | $\{Nd^{3+}\} + (Ti^{4+}) \to \{Ca^{2+}\} + (Nb^{5+})$ <br> $\{Ba^{2+} + 2Nd^{3+}\} \to \{Sr^{2+} + Bi^{3+} + Gd^{3+}\}$ |
| 2 | $\{Ba_{.2005}Nd_{.473}Gd_{.080}\blacksquare_{.2465}\}(Ti_{.97}Mg_{.03})O_3$ | $\{2\blacksquare\} + (3Ti^{4+}) \to \{2Nd^{3+}\} + (2Mg^{2+})$ |
| 3 | $\{Ba_{.2305}Nd_{543}\blacksquare_{.2265}\}(Ti_{.91}Ga_{.09})O_3$ | $\{\blacksquare\} + (3Ti^{4+}) \to \{Nd^{3+}\} + \{3Ga^{3+}\}$ |
| 4 | $\{Ba_{.2005}Nd_{.403}Gd_{.150}\blacksquare_{.2465}\}(Ti_{.98}Li_{0.2})O_3$ | $\{3Ba^{2+}\} + (Ti^{4+}) \to \{3Nd^{3+}\} + (Li^{1+})$ |

| Nr. | $TC_c$ ppm/K | $\epsilon$ | $tg\,\delta$ $* 10^{-4}$ | $\bar{r}_a$ nm | $\bar{r}_b$ nm | $\bar{r}_a/\bar{r}_b$ |
|---|---|---|---|---|---|---|
| 1 | -1 | 97 | 0.1 | 0.1370 | 0.0606 | 2.240 |
| 2 | -21 | 69 | 2.2 | 0.1360 | 0.0608 | 2.237 |
| 3 | -9 | 68 | 1.3 | 0.1378 | 0.0606 | 2.278 |
| 4 | 0 | 75 | 0.5 | 0.1354 | 0.0608 | 2.226 |

$\{\}$ = A-Platz, () = B-Platz, $\blacksquare$ = Kationenleerstelle, $\bar{r}_a\ \bar{r}_b$ = mittlerer Radius der Kationen auf dem A- bzw. B-Platz

Literatur:

R.M. Hazen, "Perowskite", Spektrum der Wissenschaften, August 1988
K.H. Schüller, "Oxide Ceramics", Process Mineralogy of Ceramic Materials S. 105, Enke Verlag 1984
W.D. Kingery, H.K. Bowen, D.R. Uhlmann, "Introduction to Ceramics", 2nd. Edition, S. 913ff. , bes. S. 969-971 bezüglich lattice engineering bei $BaTiO_3$- Dielektrika

**Patentansprüche**

1. Substituierter Barium-Neodym-Titan-Perowskit mit Defektstruktur der allgemeinen Zusammensetzung

$$[\![ A'_{a1}{}^{n1+} \ A''_{a2}{}^{n2+} \ldots A^{n'}{}_{an}{}^{nn+} \ \square_{an+1} ]\!] \ [\![ B'_{b1}{}^{m1+} \ B''_{b2}{}^{m2+} \ldots B^{m'}{}_{bm}{}^{mn+} ]\!] \ O_3$$

wobei die Kationen

$$A'_{a1}{}^{n1+} \ A''_{a2}{}^{n2+} \ldots A^{n'}{}_{an}{}^{nn+}$$

mindestens $Ba^{2+}$, $Nd^{3+}$ und gegebenenfalls ein oder mehrere Kationen aus der Gruppe $Cs^{1+}$, $Rb^{1+}$, $Tl^{1+}$, $K^{1+}$, $Pb^{2+}$, $Ag^{1}$, $Sr^{2+}$, $Na^{1+}$, $Bi^{3+}$, $La^{3+}$, $Ca^{2+}$, $Ce^{3+}$, $Cd^{2+}$, $Pr^{3+}$, $Nd^{3+}$, $Sm^{3+}$, $Eu^{3+}$, $Gd^{3+}$, $Th^{4+}$, $Tb^{3+}$, $Mn^{2+}$, $Li^{1+}$, $Dy^{3+}$, $U^{4+}$, $Y^{3+}$, $Fe^{2+}$, $Ho^{3+}$, $Ce^{4+}$, $Co^{2+}$, $Zn^{2+}$, $Er^{3+}$, $Tm^{3+}$, $Yb^{3+}$, und/oder $Lu^{3+}$ umfassen,
die Kationen

$$B'_{b1}{}^{m1+} \ B''_{b2}{}^{m2+} \ldots B^{m'}{}_{bm}{}^{mn+}$$

mindestens Titan und gegebenenfalls ein oder mehrere Kationen aus der Gruppe $Mn^{2+}$, $Cr^{2+}$, $In^{3+}$, $V^{2+}$, $Fe^{2+}$, $Pb^{4+}$, $Li^{1+}$, $Zr^{4+}$, $Co^{2+}$, $Sc^{3+}$, $Zn^{2+}$, $Cu^{2+}$, $U^{6+}$, $Mg^{2+}$, $Hf^{4+}$, $Mo^{3+}$, $Sn^{4+}$, $Ni^{2+}$, $Nb^{4+}$, $Ti^{3+}$, $W^{4+}$, $Mo^{4+}$, $Fe^{3+}$, $Mn^{3+}$, $V^{3+}$, $Re^{4+}$, $Ir^{4+}$, $Ru^{4+}$, $W^{5+}$, $Ta^{5+}$, $Cr^{3+}$, $Ga^{3+}$, $Co^{3+}$, $Mo^{5+}$, $Ni^{3+}$, $Sb^{5+}$, $W^{6+}$, $Nb^{5+}$, $Mo^{6+}$, $Fe^{4+}$, $Re^{5+}$, $V^{4+}$, $Te^{6+}$, $V^{5+}$, $Cu^{3+}$, $Al^{3+}$, $Mn^{4+}$, $Ge^{4+}$, und/oder $Re^{7+}$ umfassen,

$\square$   Kationenleerstellen sind und

$a_1 + a_2 + \ldots + a_{n+1} = 1$,
$0{,}17 < a_{n+1} < 0{,}30$,
$b_1 + b_2 + \ldots + b_n = 1$ und
$a_1 {}^* n^1 + a^2 {}^* n^2 + \ldots + a^n {}^* n^n + b_1 {}^* m^1 + b^2 {}^* m^2 + \ldots + b^m {}^* m^m = 6$ ist.

2. Substituierter Barium-Neodym-Titan-Perowskit nach Anspruch 1,
   <u>dadurch gekennzeichnet,</u>
   daß für die Kationen

$$A'_{a1}{}^{n1+} \ A''_{a2}{}^{n2+} \ldots A^{n'}{}_{an}{}^{nn+}$$

das gewichtete arithmetische Mittel der Ionenradien $0{,}1345\,\text{nm} < \bar{r}_a < 1395\,\text{nm}$ und für die Kationen

$$B'_{b1}{}^{n1+} \ B''_{b2}{}^{n2+} \ldots B^{n'}{}_{bn}{}^{nn+}$$

das gewichtete arithmetische Mittel der Ionenradien $0{,}0598\,\text{nm} < \bar{r}_b < 0{,}0620\,\text{nm}$ ist.

3. Substituierter Barium-Neodym-Titan-Perowskit nach Anspruch 1 und 2,
   <u>dadurch gekennzeichnet,</u>
   daß die Kationen

$$A'_{a1}{}^{n1+} \ A''_{a2}{}^{n2+} \ldots A^{n'}{}_{an}{}^{nn+}$$

ein oder mehrere Kationen aus der Gruppe $Ca^{2+}$, $Sr^{2+}$, $Pb^{2+}$, $Gd^{3+}$, $Sm^{3+}$, $Pr^{3+}$, $Bi^{3+}$ und $Na^{1+}$ umfassen und die Kationen

$$B'_{b1}{}^{m1+} \ B''_{b2}{}^{m2+} \ldots B^{m'}{}_{bm}{}^{mn+}$$

ein oder mehrere Kationen aus der Gruppe $Mg^{2+}$, $Nb^{5+}$, $Ta^{5+}$, $In^{3+}$, $Li^{1+}$, $Ga^{3+}$, $Zr^{4+}$, $Ge^{4+}$ und $Hf^{4+}$ umfassen.

4.  Substituierter Barium-Neodym-Titan-Perowskit nach Anspruch 1 bis 3,
    dadurch gekennzeichnet,
    daß die Kationen

$$A^{'}_{a1}{}^{n1+} \quad A^{''}_{a2}{}^{n2+} . . . A^{n'}_{an}{}^{nn+}$$

$Ba^{2+}$, $Nd^{3+}$ $Ca^{2+}$, $Sr^{2+}$, $Gd^{3+}$ und gegebenenfalls $Bi^{3+}$ sind und die Kationen

$$B^{'}_{b1}{}^{m1+} \quad B^{''}_{b2}{}^{m2+} . . . . B^{m'}_{bm}{}^{mn+}$$

$Ti^{4+}$ und $Nb^{5+}$ sind.

5.  Substituierter Barium-Neodym-Titan-Perowskit nach Anspruch 1 bis 3,
    dadurch gekennzeichnet,
    daß die Kationen

$$A^{'}_{a1}{}^{n1+} \quad A^{''}_{a2}{}^{n2+} . . . A^{n'}_{an}{}^{nn+}$$

$Li^{1+}$, $Pb^{2+}$ und/oder $Bi^{3+}$ umfassen
und/oder
die Kationen

$$B^{'}_{b1}{}^{m1+} \quad B^{''}_{b2}{}^{m2+} . . . . B^{m'}_{bm}{}^{mn+}$$

$Li^{1+}$ umfassen.

6.  Substituierter Barium-Neodym-Titan-Perowskit nach Anspruch 1 bis 4,
    dadurch gekennzeichnet,
    daß er die chemische Zusammensetzung
    $\{Ba_{.242}Sr_{.02}Ca_{.03}Nd_{.232}Gd_{.23}\blacksquare_{.246}\}[Ti_{.97}Nb_{.03}]O_3$ hat.

7.  Dielektrische, keramische Zusammensetzung,
    dadurch gekennzeichnet,
    daß sie einen substituierten Barium-Neodym-Titan-Perowskit mit Defektstruktur nach Anspruch 1 bis 6 und keramische Hilfsstoffe enthält.

8.  Dielektrische, keramische Zusammensetzung nach Anspruch 7
    dadurch gekennzeichnet,
    daß der keramische Hilfsstoff Siliziumdioxid ist.

9.  Kondensator mit keramischem Dielektrikum,
    dadurch gekennzeichnet,
    daß das Dielektrikum aus einer dielektrischen, keramischen Zusammensetzung nach Anspruch 7 oder 8 besteht.

10. Mikrowellenkomponente, insbesondere dielektrischer Resonator, mit einem keramischen Dielektrikum
    dadurch gekennzeichnet,
    daß das Dielektrikum aus einer dielektrischen,keramischen Zusammensetzung nach Anspruch 7 oder 8 besteht.

**Claims**

1.  A substituted barium-neodymium-titanium-perovskite which has a defect structure and which has the following gen-
    eral composition:

$$[A'_{a1}{}^{n1+} \ A''_{a2}{}^{n2+}...A^{n'}{}_{an}{}^{nn+} \ \blacksquare_{an+1}] \ [B'_{b1}{}^{m1+} \ B''_{b2}{}^{m2+}....B^{m'}{}_{bm}{}^{mn+}] \ O_3,$$

wherein the cations

$$A'_{a1}{}^{n1+} \ A''_{a2}{}^{n2+}...A^{n'}{}_{an}{}^{nn+}$$

at least comprise $Ba^{2+}$, $Nd^{3+}$ and, optionally, one or more canons of the group consisting of $Cs^{1+}$, $Rb^{1+}$, $Tl^{1+}$, $K^{1+}$, $Pb^{2+}$, $Ag^{1+}$, $Sr^{2+}$, $Na^{1+}$, $Bi^{3+}$, $La^{3+}$, $Ca^{2+}$, $Ce^{3+}$, $Cd^{2+}$, $Pr^{3+}$, $Nd^{3+}$, $Sm^{3+}$, $Eu^{3+}$, $Gd^{3+}$, $Th^{4+}$, $Tb^{3+}$, $Mn^{2+}$, $Li^{1+}$, $Dy^{3+}$, $U^{4+}$, $Y^{3+}$, $Fe^{2+}$, $Ho^{3+}$, $Ce^{4+}$, $Co^{2+}$, $Zn^{2+}$, $Er^{3+}$, $Tm^{3+}$, $Yb^{3+}$, and/or $Lu^{3+}$,
and the cations

$$B'_{b1}{}^{m1+} \ B''_{b2}{}^{m2+}....B^{m'}{}_{bm}{}^{mn+}$$

at least comprise titanium and, optionally, one or more cations of the group consisting of $Mn^{2+}$, $Cr^{2+}$, $In^{3+}$, $V^{2+}$, $Fe^{2+}$, $Pb^{4+}$, $Li^{1+}$, $Zr^{4+}$, $Co^{2+}$, $Sc^{3+}$, $Zn^{2+}$, $Cu^{2+}$, $U^{6+}$, $Mg^{2+}$, $Hf^{4+}$, $Mo^{3+}$, $Sn^{4+}$, $Ni^{2+}$, $Nb^{4+}$, $Ti^{3+}$, $W^{4+}$, $Mo^{4+}$, $Fe^{3+}$, $Mn^{3+}$, $V^{3+}$, $Re^{4+}$, $Ir^{4+}$, $Ru^{4+}$, $W^{5+}$, $Ta^{5+}$, $Cr^{3+}$, $Ga^{3+}$, $Co^{3+}$, $Mo^{5+}$, $Ni^{3+,}$, $Sb^{5+}$, $W^{6+}$, $Nb^{5+}$, $Mo^{6+}$, $Fe^{4+}$, $Re^{5+}$, $V^{4+}$, $Te^{6+}$, $V^{5+}$, $Cu^{3+}$, $Al^{3+}$, $Mn^{4+}$, $Ge^{4+}$, and/or $Re^{7+}$, and

■   are cation vacancies, and

$a_1 + a_2 + .... + a_{n+1} = 1$,
$0.17 < a_{n+1} < 0.30$,
$b_1 + b_2 + .... + b_n = 1$ and
$a_1*n^1 + a_2*n^2 + ...+ a_n*n^n + b_1*m^1 + b_2*m^2 + ...+ b_m*m^m = 6$.

2.  A substituted barium-neodymium-titanium-perovskite as claimed in Claim 1, characterized in that for the cations

$$A'_{a1}{}^{u1+} \ A''_{a2}{}^{n2+}...A^{n'}{}_{an}{}^{nn+}$$

the weighted arithmetic mean of the ion radii is $0.1345nm < \bar{r}_a < 0.1395nm$ and for the cations

$$B'_{b1}{}^{n1+} \ B''_{b2}{}^{n2+}...B^{n'}{}_{bn}{}^{nn+}$$

the weighted arithmetic mean of the ion radii is $0.0598nm < \bar{r}_b < 0.0620nm$.

3.  A substituted barium-neodymium-titanium-perovskite as claimed in Claims 1 and 2, characterized in that the cations

$$A'_{a1}{}^{n1+} \ A''_{a2}{}^{n2+}...A^{n'}{}_{an}{}^{nn+}$$

comprise one or more cations of the group $Ca^{2+}$, $Sr^{2+}$, $Pb^{2+}$, $Gd^{3+}$, $Sm^{3+}$, $Pr^{3+}$, $Bi^{3+}$ and $Na^{1+}$, and in that the cations

$$B'_{b1}{}^{m1+} \ B''_{b2}{}^{m2+}....B^{m'}{}_{bm}{}^{mn+}$$

comprise one or more cations of the group $Mg^{2+}$, $Nb^{5+}$, $Ta^{5+}$, $In^{3+}$, $Li^{1+}$, $Ga^{3+}$, $Zr^{4+}$, $Ge^{4+}$ and $Hf^{4+}$.

4.  A substituted barium-neodymium-titanium-perovskite as claimed in Claims 1 to 3, characterized in that the cations

$$A'^{n1+}_{a1} \quad A''^{n2+}_{a2} ... A^{n'}{}^{nn+}_{an}$$

are $Ba^{2+}$, $Nd^{3+}$ $Ca^{2+}$, $Sr^{2+}$, $Gd^{3+}$ and optionally $Bi^{3+}$ and in that the cations

$$B'^{m1+}_{b1} \quad B''^{m2+}_{b2} .... B^{m'}{}^{mn+}_{bm}$$

are $Ti^{4+}$ and $Nb^{5+}$.

5. A substituted barium-neodymium-titanium-perovskite as claimed in Claims 1 to 3, characterized in that the cations

$$A'^{n1+}_{a1} \quad A''^{n2+}_{a2} ... A^{n'}{}^{nn+}_{an}$$

comprise $Li^{1+}$, $Pb^{2+}$ and/or $Bi^{3+}$ and/or the cations

$$B'^{m1+}_{b1} \quad B''^{m2+}_{b2} .... B^{m'}{}^{mn+}_{bm}$$

comprise $Li^{1+}$.

6. A substituted barium-neodymium-titanium-perovskite as claimed in Claims 1 to 4, characterized in that said perovskite has the chemical composition: $\{Ba_{.242}Sr_{.02}Ca_{.03}Nd_{.232}Gd_{.23}\blacksquare_{.246}\}[Ti_{.97}Nb_{.03}]O_3$.

7. A dielectric, ceramic composition, characterized in that it comprises a substituted barium-neodymium-titanium-perovskite having a defect structure, as claimed in Claims 1 to 6, and ceramic auxiliary substances.

8. A dielectric, ceramic composition as claimed in Claim 7, characterized in that the ceramic auxiliary substance is silicon dioxide.

9. A capacitor comprising ceramic dielectric material, characterized in that the dielectric material consists of a dielectric, ceramic composition as claimed in Claim 7 or 8.

10. A microwave component, in particular a dielectric resonator, comprising a ceramic dielectric material, characterized in that the dielectric material consists of a dielectric, ceramic composition as claimed in Claim 7 or 8.

**Revendications**

1. Pérovskite baryum-néodyme-titane substituée à réseau avec défauts de la composition générale :

$$[[A'^{n1+}_{a1} \quad A''^{n2+}_{a2} \ ... \ A^{n'}{}^{nn+}_{an} \quad \square_{an+1}]]$$
$$[[B'^{m1+}_{b1} \quad B''^{m2+}_{b2} \ ... \ B^{m'}{}^{mn+}_{bm} \quad]]O_3$$

où :
les cations

$$A'^{n1+}_{a1} \quad A''^{n2+}_{a2} \ ... \ A^{n'}{}^{nn+}_{an}$$

comprennent au moins $Ba^{2+}$, $Nd^{3+}$, et éventuellement un ou plusieurs cations choisis dans le groupe $Cs^{1+}$, $Rb^{1+}$, $Tl^{1+}$, $K^{1+}$, $Pb^{2+}$, $Ag^1$, $Sr^{2+}$, $Na^{1+}$, $Bi^{3+}$, $La^{3+}$, $Ca^{2+}$, $Ce^{3+}$, $Cd^{2+}$, $Pr^{3+}$, $Nd^{3+}$, $Sm^{3+}$, $Eu^{3+}$, $Gd^{3+}$, $Th^{4+}$, $Tb^{3+}$, $Mn^{2+}$, $Li^{1+}$, $Dy^{3+}$, $U^{4+}$, $Y^{3+}$, $Fe^{2+}$, $Ho^{3+}$, $Ce^{4+}$, $Co^{2+}$, $Zn^{2+}$, $Er^{3+}$, $Tm^{3+}$, $Yb^{3+}$, et/ou $Lu^{3+}$ les cations

$$B'^{m1+}_{b1} \quad B''^{m2+}_{b2} \quad \cdots \quad B^{m'}_{bm}{}^{m^{n+}}$$

comprennent au moins du titane et éventuellement un ou plusieurs cations choisis dans le groupe $Mn^{2+}$, $Cr^{2+}$, $In^{3+}$, $V^{2+}$, $Fe^{2+}$, $Pb^{4+}$, $Li^{1+}$, $Zr^{4+}$, $Co^{2+}$, $Sc^{3+}$, $Zn^{2+}$, $Cu^{2+}$, $U^{6+}$, $Mg^{2+}$, $Hf^{4+}$, $Mo^{3+}$, $Sn^{4+}$, $Ni^{2+}$, $Nb^{4+}$, $Ti^{3+}$, $W^{4+}$, $Mo^{4+}$, $Fe^{3+}$, $Mn^{3+}$, $V^{3+}$, $Re^{4+}$, $Ir^{4+}$, $Ru^{4+}$, $W^{5+}$, $Ta^{5+}$, $Cr^{3+}$, $Ga^{3+}$, $Co^{3+}$, $Mo^{5+}$, $Ni^{3+,}$, $Sb^{5+}$, $W^{6+}$, $Nb^{5+}$, $Mo^{6+}$, $Fe^{4+}$, $Re^{5+}$, $V^{4+}$, $Te^{6+}$, $V^{5+}$, $Cu^{3+}$, $Al^{3+}$, $Mn^{4+}$, $Ge^{4+}$, et/ou $Re^{7+}$.

□    sont des lacunes cationiques

$a_1 + a_2 + \ldots + a_{n+1} = 1$,
$0{,}17 < a_{n+1} < 0{,}30$,
$b_1 + b_2 + \ldots + b_n = 1$ et
$a_1{}^*n^1 + a_2{}^*n^2 + \ldots + a_n{}^*n^n + b_1{}^*m^1 + b_2{}^*m^2 + \ldots + b_m{}^*m^m = 6$.

2.  Pérovskite baryum-néodyme-titane substituée suivant La revendication 1, caractérisée en ce que l'on a pour les cations

$$A'^{n1+}_{a1} \quad A''^{n2+}_{a2} \quad \cdots \quad A^{n'}_{an}{}^{n}$$

la moyenne arithmétique pondérée des rayons ioniques $0{,}1344\ nm < \underline{r}_a < 0{,}1395\ nm$ et pour les cations

$$B'^{n1+}_{b1} B''^{n2+}_{b2} \quad \cdots \quad B^{m'}_{bm}{}^{m^{n+}}$$

la moyenne arithmétique pondérée des rayons ioniques $0{,}0598\ nm < \bar{r}_b < 0{,}0620\ nm$.

3.  Pérovskite baryum-néodyme-titane substituée suivant les revendications 1 et 2, caractérisée en ce que les cations

$$A^{n1+}_{a1} \quad A''^{n2+}_{a2} \quad \cdots \quad A^{n'}_{an}{}^{n^{n+}}$$

comprennent un ou plusieurs cations choisis dans le groupe $Ca^{2+}$, $Sr^{2+}$, $Pb^{2+}$, $Gd^{3+}$, $Sm^{3+}$, $Pr^{3+}$, $Bi^{3+}$ et $Na^{1+}$ et
les cations

$$B'^{m1+}_{b1} \quad B''^{m2+}_{b2} \quad \cdots \quad B^{m'}_{bm}{}^{mn+}$$

comprennent un ou plusieurs cations choisis dans le groupe $Mg^{2+}$, $Nb^{5+}$, $Ta^{5+}$, $In^{3+}$, $Li^{1+}$, $Ga^{3+}$, $Zr^{4+}$, $Ge^{4+}$, et $Hf^{4+}$.

4.  Pérovskite baryum-néodyme-titane substituée suivant les revendications 1 à 3, caractérisée en ce que les cations

$$A'^{n1+}_{a1} \quad A''^{n2+}_{a2} \quad \cdots \quad A^{n'}_{an}{}^{nn},$$

$Ba^{2+}$, $Nd^{3+}$, $Ca^{2+}$, $Sr^{2+}$, $Gd^{3+}$ et éventuellement $Bi^{3+}$ et les cations

$$B'^{m1+}_{b1}$$

$$B''^{m2+}_{b2} \quad \ldots \quad B^{m'}{}^{mn+}_{bm}$$

sont $Ti^{4+}$ et $Nb^{5+}$.

5. Pérovskite baryum-néodyme-titane substituée suivant les revendications 1 à 3, caractérisée en ce que les cations

$$A'^{n1+}_{a1} \quad A''^{n2+}_{a2} \quad \ldots \quad A^{n'}{}^{nn+}_{an}$$

comprennent $Li^{1+}$, $Pb^{2+}$ et/ou $Bi^{3+}$
et/ou
les cations

$$B'^{m1+}_{b1} \quad B''^{m2+}_{b2} \quad \ldots \quad B^{m'}{}^{mn+}_{bm}$$

comprennent $Li^{1+}$.

6. Pérovskite baryum-néodyme-titane substituée suivant les revendications 1 à 5, caractérisée en ce qu'elle a la composition chimique
$$\{Ba_{.242}Sr_{.02}Ca_{.03}Nd_{.232}Gd_{.23}\square_{.246}\}[Ti_{.97}Nb_{.03}]O_3.$$

7. Composition céramique diélectrique, caractérisée en ce qu'elle contient une pérovskite baryum-néodyme-titane substituée à réseau avec défauts suivant les revendications 1 à 6 et des substances auxiliaires céramiques.

8. Composition céramique diélectrique suivant la revendication 7, caractérisée en ce que la substance auxiliaire céramique est le dioxyde de silicium.

9. Condensateur comprenant un diélectrique céramique, caractérisé en ce que le diélectrique consiste en une composition céramique diélectrique suivant la revendication 7 ou 8.

10. Composant micro-onde, en particulier, résonateur diélectrique, comprenant un diélectrique céramique, caractérisé en ce que le diélectrique consiste en une composition céramique diélectrique suivant la revendication 7 ou 8.

FIG. 1

$[Ba_{1-3(x+y)} Nd_{2x} Gd_{2y} \square_{x+y}] (Ti) O_3$

FIG. 2

$$[Ba_{1-3(x+y)} Nd_{2x} Sm_{2y} \square_{x+y}](Ti)O_3$$

FIG. 3

$$[Ba_{.208} Nd_{.528} \square_{.264}] (Ti_{1-x} B_x) O_3$$
$$B = Hf^{4+}, Zr^{4+}$$

FIG. 4

FIG. 5

FIG. 6a

FIG. 6b